Europäisches Patentamt

European Patent Office

Office européen des brevets

(11) Publication number: **0 100 412**
**B1**

(12) **EUROPEAN PATENT SPECIFICATION**

(45) Date of publication of patent specification: **04.07.90**

(21) Application number: **83105426.7**

(22) Date of filing: **01.06.83**

(51) Int. Cl.⁵: **G 01 B 11/10, B 65 H 63/06, G 01 B 11/02**

(54) Suture inspection and gauging system.

(30) Priority: **02.07.82 US 394580**

(43) Date of publication of application:
**15.02.84 Bulletin 84/07**

(45) Publication of the grant of the patent:
**04.07.90 Bulletin 90/27**

(84) Designated Contracting States:
**BE DE FR GB NL**

(56) References cited:
**DE-A-2 949 303
DE-A-3 129 890
GB-A-2 064 106
US-A-3 709 610
US-A-3 882 302
US-A-3 947 129
US-A-4 139 890**

(73) Proprietor: **AMERICAN CYANAMID COMPANY
1937 West Main Street P.O. Box 60
Stamford Connecticut 06904-0060 (US)**

(72) Inventor: **Zoltan, Bart Joseph
152 De Wolf Road
Old Tappan New Jersey 07675 (US)**

(74) Representative: **Wächtershäuser, Günter, Dr.
Tal 29
D-8000 München 2 (DE)**

Courier Press, Leamington Spa, England.

## Description

Background of the Invention

This invention relates to the inspection and gauging of surgical suture material and, particularly, to a system for monitoring the diameter of continuously moving braided surgical suture filamentary material and identifying and locating flaws, such as frays, in the material during the manufacturing process.

Current inspection of filamentary suture material, such as braided polyglycolic acid yarn which is to be made into sutures such of the type sold under the trademark Dexon®, is carried out using a combination of machine testing and manual inspection. Thus, gross defects in suture material are presently ascertained by apparatus relying upon interupted illumination and an out of specification sensor followed by running the braided material through the fingers of inspectors to determine minor defects. Such procedures are time consuming and labor intensive. Neverthless, suture manufacture requires quality control inspection of the product and could benefit from a fully automated inspection method and system including continuous feed of suture material through an inspection station and a highly reliable means of recognizing faulty material.

The testing of opaque work pieces utilizing a light source projecting a beam of light on the work piece to generate a shadow image, projection of the image and beam on a screen where photoelectric sensors can compare characteristics of the shadow image and generate output signals to measure differences in dimensions or orientation are known in the art.

GB—A—2,064,106 discloses a method for measuring the diameter f a thread according to the prior art portion of Claim 1. DE—A—2,949,303 discloses an illumination level comparison means.

U.S. Patent No. 3,851,180 discloses an apparatus for measuring the diameter of a fine wire of 100 microns wherein parallel laser beams are projected upon the wire to form a Fraunhofer diffraction image. The spacing between the peak bright spots of the diffraction image is counted, an optical filter makes the signal level equal to that of a predetermined number of diffractions while a photoelectric transducer, responsive to signals, and appropriate circuits and counters determine the distance between the centers of two signals enabling measurement of the wire diameter. U.S. Patent No. 3,947,129 discloses an apparatus for measuring the diameter of a moving wire in which the wire is illuminated by a light beam which then passes through a cylindrical lens and a slit aperture for projection of the wire contours on an optoelectrical member, such as a photodiode array combined with read out electronic devices, to obtain signals to trigger a fault indicator if dimensions of the wire depart in either direction from certain pre-specified values. The light source can be a lamp emitting visible light or a radiation source emitting ultra-violet or infrared light.

U.S. Patent No. 4,171,161 discloses a method and apparatus to test individual elongated opaque work pieces with respect to orientation, size and material integrity in which a light source, preferably an electric flashtube, generates a beam of light which is collimated. A work piece to be tested is placed in the beam to generate a shadow image projected on a screen, with intervening optical enlargement, in which photoelectric sensors are located. Outputs from the sensors are compared with each other or a reference to determine relative shadow image characteristics and hence the properties to be measured. U.S. Patent No. 4,260,260 discloses a process and apparatus for checking the dimensions of manufactured parts bv projecting the profile of the part, by illumination with a parallel beam, on an optical receiver including protoelectric cells. The part is continuously moved perpendicular to the beam and the areas of the illuminated surfaces of the cells are measured and compared with reference values to enable determination of the dimension.

Systems of the above described type, while perhaps suitablefor the specific parts discussed as being measured, are not the most advantageous for ispection and gauging of filamentary braided suture material. For example, only extremely small diameter wires yield useful Fraunhofer diffraction patterns and systems relying thereon would not be applicable to suture thickness filaments. Other systems do not truly gauge but merely measure out-of-specification conditions. Yet others, when applied to rapidly moving filaments, are susceptible to vibrations because of the limited detectors employed and the light sources utilized. Thus, there exists a need for a fully automated suture inspection system which can be utilized in the manufacturing environment and includes the ability to feed suture material continuously through an inspection station with recognition or marking of faulty segments for quality control.

Summary of the Invention

An object of the present invention is to provide a system by which the process of detecting faults in filamentary suture materials, such as braided polyglycolic acid and other synthetic polymer suture materials, is automated to allow an operator to continuously select upper and lower limits of acceptable suture diameters as well as frayed material with the assistance, if desired, of both an audible alarm and appropriate electronic pulses responsive to deviations from specified limits.

The foregoing is achieved, according to the invention, through the provision of a system as defined in claim 1.

Thus, an object of the present invention is the provision of a system for automatically inspecting filamentary material, such as suture material, continuously for the determination of deviation from predetermined dimensions and the ascertainment of faults.

The system of the invention may utilize a single output signal indicating the presence of a fault. In addition, three individual outputs, one each for each type of suture fault, for example, oversize, undersize and frayed material, may be utilized. The system may also include signals which provide continuous suture size information. The information may be updated rapidly, such as 1000 times per second, enabling high suture feed rates. The suture product is continuously transported past the source of illumination and its silhouette projected, through an optical system, on the detector. The detector is scanned rapidly, such as in 0.5 milliseconds with another 0.5 milliseconds used to determine whether the suture segment scanned is acceptable.

Thus, a further objeot of this invention is the provision of a method and system providing suture inspection, fault enumeration and continuous, nearly instantaneous, suture gauging.

The system of the present invention meets the important criteria desirable for suture inspection. The suture material is illuminated in a manner such that the irradiance falling upon the detector array is sufficient to overcome ambient light in a manufacturing facility and provide a contrast between the suture and background. The system is relatively insensitive to motion perpendicular to the optical axis, an important advantage that eliminates the drawbacks normally associated with vibrations occuring during continuous monitoring of a moving material, and the magnification is easily adjustable. The assembly of components utilized in the system is sturdy and durable and well suited for use in a manufacturing environment.

Accordingly, yet a further object of this invention is the provision of a system for inspecting continuously moving filamentary material which is capable of use in a manufacturing environment by providing the necessary illumination, ease of projection and optical stability.

The foregoing and other objects, features and advantages of the invention will be further apparent from the following description thereof, taken with reference to the drawings, and the claims appended hereto.

Brief Description of the Drawings

FIGURE 1 is a schematic illustration of a suture inspection and gauging system according to an embodiment of the invention;

FIGURE 2 is a side view, partly in section, of a detail of the system of FIGURE 1 illustrating the illumination of the suture and its projected silhouette on the detector array; and

FIGURE 3 is a block diagram schematically illustrating the functional electronics of a suture inspection and gauging method and system according to an embodiment of the invention.

Description of the Preferred Embodiments

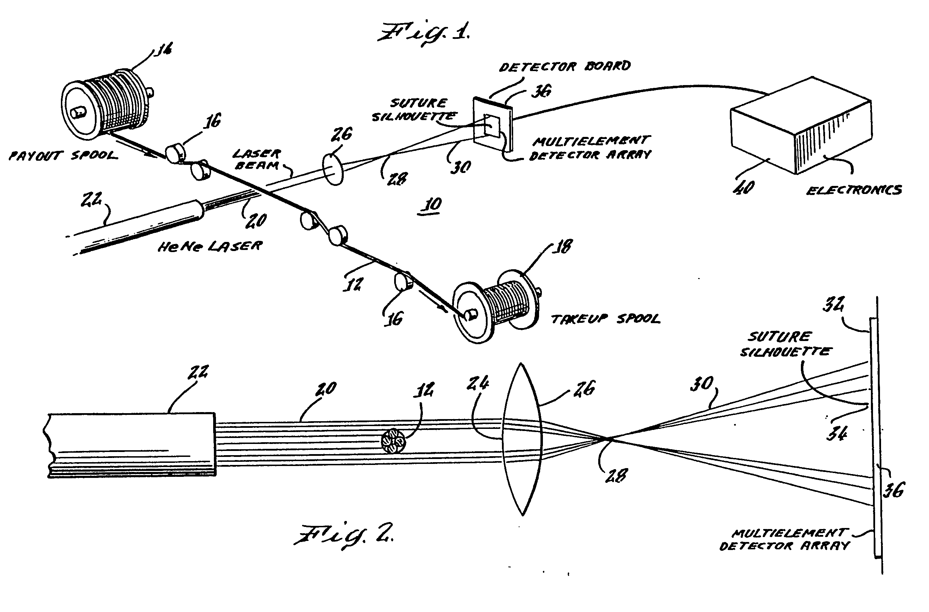

Referring to FIGURE 1, there is shown a suture inspection and gauging system indicated generally at l0. The filamentary material 12, in this case braided synthetic polymer material which has been melt spun, is fed from a pay out spool 14 under and over guide rollers 16 to a take up spool 18. As the suture material 12 is continuously fed from the pay out spool 14 to the take up spool 18 it is illuminated by a beam of coherent light, referred to at 20, which is produced by a helium neon laser 22. The laser 22 produces a narrow beam of collimated monochromatic light which passes through the lens 26 by which it is focused to the point 28 from whence it diverges away from the focal line. The diverging beam 30 is intercepted by a multi-element detector array 32.

As illustrated in greater detail in FIGURE 2, the filamentary suture material 12, shown there as being comprised of individual fibers in braided form, passes between the laser light source 22 and the lens 26. As a result, the suture material 12 blocks some of the collimated laser radiation 20 from reaching the lens 28. Because the laser source emits parallel rays of light, as shown, the suture 12 projects a silhoutte, referred to at 24, on the lens 28 which in turn projects it on the multielement detector array 32 which is mounted on the board 36.

The magnification of the silhouette, on the multi-element detector array 32, indicated generally at 34, changes with position. Thus, as the detector board 36 holding the multi-element detector array 32 is moved away from the focal point 28 of the lens 26 the silhouette 34 of the suture 12 becomes larger. Consequently, the magnification is a linear function of position and is adjusted without the need to change lenses. Yet, it is important to note that the distanoe between the suture 12 and the lens 26 need not be maintained and that even if the suture were closer to or farther from the lens 26, its silhouette, 24 will be projected faithfully on the lens. A similar effect exists on the image side of the optics with the silhouette of the suture remaining well defined regardless of the position of the plane of the detector board 36. Thus neither suture-to-lens nor lens-to-detector board distances need be maintained to achieve high levels of accuracy making the system particularly adapted for convenient use in a manufacturing environment.

The laser may advantageously be a 0.5 milliwatt laser operating at 632.8 nm. The lens 26 may advantageously be a 25 mm focal length standard Cannon T.V. lens. The lens 26 may also comprise a system of lenses. A product silhouette magnified to a size of approximately 50 percent of the height of the detector array 32 has proven satisfactory. The desired durability and required optical stability may be obtained by mounting the components on carriages, such as those available under the designation X-95, from Klinger Scientific Corp., Jamaica New York, which in turn are mounted on rails from the same source.

The multi-element detector array 32 is a photodiode array, such as that available under the designation. EG & G RL-128G from Reticon, Division of E.G. & G. Inc., Sunnyvale, California, mounted on an evaluation board available from the same source under the designation RC301. Such an array is comprised of a series of 128 light sensors, each less than 0.025 mm (0.001 inch) in width, mounted on 0.025 mm (0.001 inches) centers. All of the 128 detector chips are deposited on a single silicon substrate and take up a total of 1/8 inch in length.

When the detector array 32 is appropriately energized, a video-like signal is available on one of the detector chip pins (not illustrated). On this pin appears successively a voltage proportional to the amount of light falling on the successive detector elements. This continues for approximately 0.5 m sec, during which time each of the 128 elements has its signal multiplexed to an output pin. After a pause of 0.5 m sec, the process is repeated. Although the signal from each element is only a microsecond in duration, all of the irradiation falling upon the detector array 32 is sensed because silicon photodiodes integrate the light over the interval between samplings.

The system electronics referred to generally at 40 in FIGURE 1 represents the provision of various functions including the supply of power to the detector array 32 and to displays in integrated circuits described in greater detail below. In addition, the block 40 represents the electronics used to examine the video signals generated by the detector array 32. These include an adjustable threshold Schmitt trigger circuit to convert the analog video signal to a digitized light-present/light-absent signal, circuits to determine how many elements of the detector array are blocked from receiving light by the suture 12 being inspected, that is, a determination of the suture silhouette 34, and a display to indicate the count of the same, circuitry to compare suture size to pre-selectable upper and lower limits as well as circuitry to detect a fray in the suture. In addition, in order to provide meaningful data to an operator, the electronics may include an electrical voltage level change from 0 volts to +5 volts when a defect is sensed and an audible alarm, capable of being turned off, to indicate a defect, electrical outputs for each type of defect such as undersize, oversize or fray and a display to indicate the presence of a fray.

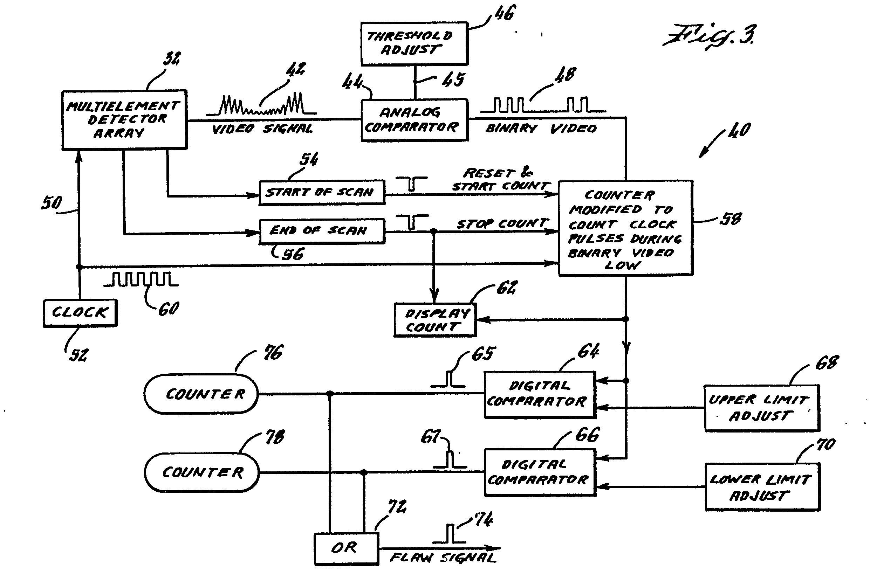

A schematic illustration, in functional block form, of the electronics represented by block 40 is illustrated in FIGURE 3. The multi-element detector array 32, previously discussed, generates a video signal 42 which is taken by the analog comparator 44 which compares the magnitude of the video signal voltage with the magnitude of the voltage of a signal 45 from a threshold adjust 46. The output generated by the analog comparator 44 is a binary video signal 48. This signal is high in those instances when the video signal voltage is higher than the threshold signal voltage from the threshold adjust 46. At all other times the binary video signal voltage is low.

The multi-element detector array 32 utilizes a clock signal 50 from the clock 52 to determine the timing of the video signal 42. Also available from the detector array 32 is a start-of-scan signal 54 and an end-of-scan signal 56. A counter 58 counts pulses 60 from the clock 52 when the binary video signal 42 is low and only between the start-of-scan signal 54 and the end-of-scan signal 56.

After the end-of-scan signal 56, a count display 62 and digital comparators 64 and 66 are enabled for a period of time which ends prior to the next start of scan signal 54. The upper limit of acceptable counts is sent via an upper limit adjust 68 and the lower limit is set via a lower limit adjust 70. If the count exceeds the upper limit or is below the lower limit, the comparator 64 or 66, as appropriate, respectively will indicate an exceeded limit. An OR gate 72 provides, as an output, a flaw signal 74 which is indicative of out of specification suture material. A third counter 76 enumerates the number of times that the signal 65 from the upper level limit comparator 64 goes positive. A fourth counter 78 enumerates the number of times that the signal 67 from the lower limit comparator 66 goes positive.

The count can beconsidered indicative of suture width and displayed, as is known, on a panel for an operator to visually scan the digits to determine if the readings are within limits. At 1000 times per second counts it is necessary for comparators to test the three digit number for upper and lower limits, which limits may be selected by the operator with appropriate thumb wheel or other switches which may also be mounted on an operations panel. In most instances, a fray in the suture material will yield an increased count and thereby be indicative of an oversized area of the suture. It is also possible for a suture to part in such a way as to leave the total measured width within limits but to have this total made up of two parts. Such a condition may be sensed by counting the number of +5 volt to 0 volt transitions of the video envelope. Such a two component measurement is deemed a fray and is rejected.

The flaw signal from the OR gate 72 may be used to indicate a fault regardless of its source. An audible alarm may be wired into the system, as is known in the art, such that a short high frequency tone may sound at the time when a faulty segment passes through the suture inspection and gauging system. The alarm can be operator disabled. A visual display, such as a standard output connector mounted on a panel to indicate a voltage level change from 0 to 5 volts occuring at the instant of fault detection, may be provided.

The individual electronic components themselves are standard elements commercially availably and their assembly with the required circuitry is known to those skilled in the art and need not be further described. While the inspection and gauging system has been described with particular reference to suture material, it should be understood that it is applicable to similar filamentary products.

**Claim**

A system for continuously inspecting and gauging filamentary suture material having a light source means for providing a narrow beam of collimated monochromatic light, means to feed filamentary suture material past the light source and a detector array of photosensitive detector elements positioned to receive the beam of light on its surface and to project a silhouette of the suture material on the detector array, each of the detector elements generating a scanning proportional to the light falling therein, threshold adjust means for selecting illumination level values and analogue comparator means for receiving and comparing the generated illuminated levels with the preselected values and generating a voltage output signal in relation thereto, characterized in that said narrow beam of collimated monochromatic light is produced by a laser, means (26) are provided for projecting said silhouette on said detector array and said filamentary suture material is passed between said laser and said projecting means (26), said system being further characterized by a clockmeans (52) to determine the pulse timing of the output signals, counter means (76, 78) to count the pulses and digital comparator means (64, 66) to indicate an exceeded limit relating to suture material characteristics, said counter means further comprising counter means (58) to count voltage transitions in the analogue comparator means and indicate a count greater than two to indicate the presence of a fray in the suture material.

**Patentanspruch**

System zur kontinuierlichen Untersuchung und Messung von filamentärem Nathmaterial mit einer Lichtquelle zur Erzeugung eines engen Lichtstrahls aus kollimiertem monochromatischem Licht Einrichtungen, um das filamentäre Nahtmaterial an der Lichtquelle vorbeizuführen und einer Detektoranordnung von photoempfindlichen Detektorelementen, die so positioniert sind, das sie den Lichtstrahl auf ihrer Oberfläche empfangen und eine Silhouette des Nahtmaterials auf der Detektoranordnung projizieren, wobei jedes der Detektorelemente eine Abtastung erzeugt, die dem einfallenden Licht proportional ist, Schwellenwert-Einstellvorrichtungen zur Auswahl von Illuminationsniveauwerten und Analogkomparatoreinrichtungen zur Aufnahme und zum Vergleich des erzeugten Illuminationsniveaus mit den vorgewählten Werten und zur Erzeugung eines Spannungsausgangssignals in Relation dazu, dadurch gekennzeichnet, daß der enge Lichtstrahl von kollimiertem monochromatischem Licht mittels eines Lasers erzeugt wird, Einrichtungen (26) vorgesehen sind, um die Silhouette auf der Detektoranordnung zu projizieren und das filamentäre Nahtmaterial zwischen dem Laser und der Projiziereinrichtung (26) vorbeigeführt wird, wobei das System weiter gekennzeichnet ist durch eine Zeitmeßeinrichtung (52) zur Bestimmung des Puls-Timing der Ausgangssignale, Zähleinrichtungen (76, 78) zum Zählen der Pulse und Digitalkomparatoreinrichtungen (64, 66) zur Anzeige eines überschrittenen Grenzwerts bezüglich der Nahtmaterialeigenschaften, wobei die Zähleinrichtungen ferner Zähleinrichtungen (58) umfassen, um Spannungstransitionen in den Analogkomparatoreinrichtungen zu zählen und ein Ergebnis größer als zwei anzuzeigen, um das Vorliegen einer Ausfransung in dem Nahtmaterial anzuzeigen.

**Revendication**

Dispositif pour l'inspection et la mesure en continu de filaments de suture, comportant une source lumineuse émettant un faisceau étroit de lumière monochromatique collimatée, des moyens pour faire défiler le filament devant la source lumineuse et un réseau de détection composé de détecteurs photosensibles positionnés de manière à recevoir le faisceau de lumière à sa surface et projeter une silhouette du filament sur le réseau de détection, chacun des détecteurs produisant un balayage proportionnel à la lumière qu'il reçoit, des moyens de réglage de seuil pour sélectionner les valeurs du niveau d'éclairement et un comparateur analogique pour recevoir et comparer les niveaux d'éclairement produits avec les valeurs présélectionnées et émettre un signal de sortie de tension en relation avec celles-ci, dispositif caractérisé en ce que le faisceau étroit de lumière monochromatique collimatée est produit par un laser, des moyens (26) sont disposés pour projeter la silhouette sur le réseau de détection et le filament passe entre le laser et les moyens de projection (26), et en ce qu'il comporte en outre des horloges (52) pour déterminer la durée des impulsions des signaux de sortie, des compteurs (76, 78) pour compter les impulsions et des comparateurs numériques (64, 66) pour indiquer un dépassement d'une limite relative aux caractéristiques du filament, ces compteurs comprenant de plus un compteur (58) pour compter les transitions de tension du comparateur analogique et indiquer un compte supérieur à deux pour signaler la présence d'une frange dans le filament.

_Fig. 1._

DETECTOR BOARD

36

SUTURE
SILHOUETTE

MULTIELEMENT
DETECTOR ARRAY

40    ELECTRONICS

14

16

26

28

30

10

22

20

PAYOUT SPOOL

LASER
BEAM

HeNe LASER

12

16

18

TAKEUP SPOOL

32

SUTURE
SILHOUETTE

34

36

22

20

12

24

26

30

28

MULTIELEMENT
DETECTOR ARRAY

_Fig. 2._

EP 0 100 412 B1

*Fig. 3.*

MULTIELEMENT DETECTOR ARRAY *32*

VIDEO SIGNAL *42*

THRESHOLD ADJUST *46*

*44* ANALOG COMPARATOR *45*

BINARY VIDEO *48*

*40*

*50*

START OF SCAN *54*

RESET & START COUNT

END OF SCAN *56*

STOP COUNT

COUNTER MODIFIED TO COUNT CLOCK PULSES DURING BINARY VIDEO LOW *58*

CLOCK *52*

*60*

DISPLAY COUNT *62*

COUNTER *76*

DIGITAL COMPARATOR *64*

*65*

UPPER LIMIT ADJUST *68*

COUNTER *78*

*67*

DIGITAL COMPARATOR *66*

LOWER LIMIT ADJUST *70*

OR *72*

FLAW SIGNAL *74*